(19) Europäisches Patentamt
European Patent Office
Office européen des brevets

(11) Publication number: 0 096 899
B1

(12) # EUROPEAN PATENT SPECIFICATION

(45) Date of publication of patent specification: 09.09.87

(51) Int. Cl.$^4$: **H 01 S 3/03,** H 01 S 3/097

(21) Application number: 83105881.3

(22) Date of filing: 15.06.83

(54) **Pulsed gas laser in a sealed structure.**

(30) Priority: 15.06.82 IT 4864182

(43) Date of publication of application: 28.12.83 Bulletin 83/52

(45) Publication of the grant of the patent: 09.09.87 Bulletin 87/37

(84) Designated Contracting States: DE FR GB NL SE

(56) References cited:
DE-A-2 338 502
DE-A-3 138 570
APPLIED PHYSICS LETTERS, vol. 37, no. 10, 15th November 1980, pages 883-885, New York, USA, CHEN JIANWEN et al.: "Efficient operation of Blumlein-discharge-excited XeCl laser"
REV. SCI. INSTRUMENTS, vol. 50, no. 1, January 1979, pages 59-63, New York, USA, V. HASSON et al.: "Ultraminiature high-power gas discharge lasers"
PATENTS ABSTRACTS OF JAPAN, vol. 6, no. 87(E-108)(965), 25th May 1982

(73) Proprietor: SELENIA INDUSTRIE ELETTRONICHE ASSOCIATE S.p.A.
Via Tiburtina, KM 12.400
I-00131 Roma (IT)

(72) Inventor: Penco, Eugenio
Via Bevignani, 12
I-00162 Roma (IT)
Inventor: Marchetti, Renato
Via Oderisi da Gubbio, 181
I-00128 Roma (IT)
Inventor: Bagaglia, Adriano
Via Carlo Zaccagnini, 63
I-00128 Roma (IT)

(74) Representative: Gustorf, Gerhard, Dipl.-Ing.
Mühlenstrasse 1
D-8300 Landshut (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 096 899 B1

**Description**

The present invention refers to a pulsed gas laser according to the first part of claim 1. Such a laser is known from document "Review of Scientific Instruments", Vol. 50(1), January 1979, pages 59—63.

In certain types of gas lasers it is necessary to excite, in a uniform manner by means of an electric impulse, a gas mixture at atmospheric pressure (TEA type laser — Transverse Excited Atmospheric Pressure).

The fundamental problem to resolve in these types of lasers is that for pressures greater than a few tens of Torrs the discharge becomes unstable because the glow transition occurs at a localised arc. In these conditions pumping is inhibited and thus there is no laser emission.

Many experiments have been carried out in attempts to solve this problem, utilizing different techniques, all tending to supply a pre-ionisation at the discharge zone, in such a way that a glow type discharge is obtained even at pressures above the atmospheric pressure. The adoption of a set of auxiliary discharges which emit radiation which ionizes the gaseous mixture between the electrodes before the discharge of two impulsive discharges occurs, has proved to be particularly useful. The first impulse supplies U.V. radiation which pre-ionizes the mixture and the second impulse excites the gaseous mixture, obtaining in this way the laser effect.

Another pre-ionisation system used is that called the Lamberton-Pearson. This utilizes a corona type discharge produced from two metallic wires placed near the electrodes. Applying an impulsive potential to the discharge electrodes, a corona type pre-discharge takes place between the wires and the electrodes with the greatest potential difference. This discharge emits U.V. radiation which pre-ionizes the zone between the electrodes, permitting uniform discharges.

The disadvantages of the first configuration are given by the insertion of an auxiliary pre-ionisation source; the discharges which produce U.V. increase the dissociation of the gases

$$CO_2 \xrightarrow{\text{discharge}} CO + 1/2\ O_2.$$

In this manner the laser life-time is reduced in the "sealed-off" operation since the presence of oxygen causes a laser malfunction.

However, the disadvantages of the second configuration are given by the precision required by machining as well as by the fact the system is not 100% "arc free" (that is, a certain number of laser impulses are lost, typically 0.1%) because sometimes instead of the pre-discharge occurring between the wires and the electrode an arc occurs and thus there is no pumping nor laseration.

At present there is much effort in obtaining U.V. radiation in a simple and effective way, without the disadvantages of the systems illustrated above. One of the methods consists in obtaining U.V. emission from surface corona discharges, formed near the discharge electrodes [1—2]. The very short delay between the two discharges allows a good utilisation of the pre-ionisation energy and minimises the time during which negative ions can occur [3] and whose growth play an important role in the excitation of sealed $CO_2$ laser. The duration of these devices depends also on the pumping instability: an instability which can be attributed to an increase of ions during the pre-ionisation phase. The increase of negative ions is associated with an increase in oxygen [2—3].

The two techniques utilized up to now, attributed to two researchers, Hasson (South Africa) and Ernst (Holland), are briefly illustrated.

In the United States, United Technology, Honeywell, AVCO and others, are experimenting with similar lasers.

Hasson has used two configurations; the first [2—4] utilizes a fast discharge Blumlein type system with a distributed constants discharge capacitance (the condensers consist of bi-plated laminates for printed circuits). The pre-ionisation is obtained by two electrodes placed near the discharge electrodes.

Basically this lay-out does not differ from Lamberton-Pearson, except for the fact that the corona discharge is of a surface type.

The second configuration utilizes concentrated constants capacitance. The pre-ionisation is obtained by means of a capacitor placed near the electrodes with a bi-plated laminated strip for printed circuits. To this capacitor an impulsive over-potential is applied which causes the surface corona discharge.

The Hasson system just described presents the following disadvantages:

1) Constructive difficulties with consequently high realisation costs.

2) The pre-ionisation is positioned from one side only, this does not permit the attainment of a good beam quality, in as much as the discharge is not symmetrical.

3) The use of the laminate for printed circuits as a pre-ionizer causes a contamination, with the possibility of producing organic substances and facilitated reactions of the discharges.

The Ernst system presents a configuration in which discharge capacitance with distributed constants is used. The production mechanism for the U.V. is similar to the preceding system. A strong impulsive electric field, obtained from a Blumlein circuit, is applied to the electrodes and to the dielectric (glass of which the laser container is made). The corona discharge which is formed on the dielectric emits U.V. which pre-ionizes the inter-electrode space. At this stage the discharge between the electrodes occurs [5]. The system also presents some disadvantages:

1) Constructive difficulties with consequently high realisation costs. Glued glass (laser container).

2) Functions only with fast discharges obtained

with distributed capacitance. This technique does not allow compactness. To obtain 20 nF of discharge capacitance with a bi-plated printed circuit having a thickness of 1.6 mm and a discharge potential of 16 KV, an area of about 4500 $cm^2$ is necessary. A concentrated constants condenser of the same energy measures 10 × 5 × 5 cm.

3) The U.V. generation mechanism is rather critical [5].

The present invention as claimed solves the following technical problems:

a) U.V. pre-ionisation produced by surface corona discharges where the pre-ionisation must illuminate both electrodes in such a way as to make possible a good quality laser beam.

b) Simple "design" which does not use complex or hard to construct geometrics.

c) Low production costs (ease of realisation and assembly).

For an illustrative but not limitative purpose, we shall now describe the figures which represent the present invention.

Figure 1 is a cross-section of a laser according to the invention,

Figure 2 represents a diagram of the output energy, and

Figure 3 is a perspective view of the laser of Fig. 1, in which one of the mirrors is omitted.

As illustrated in Figures 1 and 3, the laser device according to an embodiment of the invention presents a hollow tube 3 of insulating material (such as glass, alumina, cervit etc.). This tube 3 of cylindrical shape is hermetically closed at both ends by means of mirror supports 5, one of which is only partially reflective. Said tube 3 is also suitable for vacuum.

The tube 3 internally supports two electrodes 6 of parallelepipedic shape which extend parallel to the longitudinal axis of said tube 3. Each electrode is fixed in the tube 3 by means of a radial projection 7 serving also as a terminal for applying a voltage. The two edges 8 of the electrodes 6 directed to the interior of the tube 3 are smoothed in order to generate an extremely uniform electric field in the interior of the tube 3.

The upper electrode 6 is supported by a sleeve 1 of insulating material fixed to the tube 3. On the outside of the tube 3 a metallic layer 2 is deposited which serves as outer electrode electrically connected with the lower electrode 6. Said metallic layer 2 extends over the major part of the tube 3 in the axial direction and almost completely over the circumference, a space 9 being free in order to fix the sleeve 1 on the tube 3. When an impulsive discharge is applied, the strong electric field creates surface discharges of the corona type 4 on the dielectric (inner cylindrical part of the tube 3) thus generating a U.V. emission which pre-ionizes the space between the electrodes 6. In this way we have been able to obtain very stable discharges, so much so that in 1.2 × $10^5$ laser impulses not one has been lost. This system meets the four requisites a), b) and c) described above, bearing in mind that the gas used is of the commercial type.

The arrangement according to the invention is such that corona discharges 4 are generated at the moment of pumping in the interior of the tube 3 which discharges are extremely uniform and which generate a U.S. emission which pre-ionizes the gaseous laser medium existing between the electrodes 6.

The laser system according to the invention is particularly suitable to be used for telemetric purposes of medium distances.

Literature


(1) B. Norris and L.S. Smith
Sealed mini-TEA $CO_2$ laser.
I.Q. Electron Vol. QE-15, No. 9, p. 76d.

(2) V. Hasson e.a.
Proceedings on the International Conference on Laser, 1979 — p. 524—528.

(3) V. Hasson
Contact High Pressure $CO_2$ Lasers SPIE, Vol. 227, 1980, p. 35—43.

(4) V. Hasson e.a.
Proceedings of the International Conference on Laser, 1979, p. 524—528.

(5) G. J. Ernst
PH.D. Thesis TWENTE University of Technology.
Enschede, The Netherlands, 1977.


**Claims**

1. Pulsed gas laser with transverse discharge at atmospheric pressure, having a hollow tubular element (3) of insulating material in contact with the gaseous laser medium, a pair of parallel electrodes (6) being arranged in said tubular element (3) said electrodes (6) extending parallel to the axis of said tubular element (3), said tubular element (3) having a conductive layer (2) which is connected to one of said electrodes (6) for creating a surface discharge on an inner part of said tubular element (2) and generating thereby an UV-emission, which preionizes the space between said electrodes (6), characterized in that said conductive layer (2) is provided on the outside of said tubular element (3) and extends axially over the major part of said tubular element (3) and almost completely circumferentially.

2. Laser according to claim 1, characterized in that said tubular element (3) is of cylindrical structure.

3. Laser according to claim 1 or 2, characterized in that the gaseous laser medium is $CO_2$.

4. Laser according to any one of the preceding claims, characterized in that the electrodes (6) have the shape of parallelepipeds, the inner edges (8) of which are smoothed.

**Patentansprüche**

1. Gepulster Gaslaser mit Querentladung bei atmosphärischem Druck, umfassend ein hohles, rohrförmiges Element (3) aus isolierendem Material, das in Kontakt mit dem gasförmigen Lasermedium ist, ein Paar paralleler Elektroden (6), die

in dem rohrförmigen Element (3) angeordnet sind und sich parallel zu dessen Achse erstrecken, wobei das rohrförmige Element (3) eine leitfähige Schicht (2) hat, die mit einer der Elektroden (6) verbunden ist und dadurch eine Oberflächenentladung an einem inneren Bereich des rohrförmigen Elementes (3) und damit eine UV-Emission herbeiführt, die den Raum zwischen den Elektroden (6) vorionisiert, dadurch gekennzeichnet, daß die leitfähige Schicht (2) auf der Außenfläche des rohrförmigen Elementes (3) vorgesehen ist, sich axial über dessen größten Teil erstreckt und das rohrförmige Element (3) auf dem Umfang fast völlig umfaßt.

2. Gaslaser nach Anspruch 1, dadurch gekennzeichnet, daß das rohrförmige Element (3) eine Zylinderform hat.

3. Gaslaser nach Anspruch 1 oder 2, dadurch gekennzeichnet, daß das gasförmige Lasermedium $CO_2$ ist.

4. Gaslaser nach einem der vorhergehenden Ansprüche, dadurch gekennzeichnet, daß die Elektroden (6) eine parallelelepipedische Form haben und an den Innenkanten abgerundet sind.

**Revendications**

1. Laser à gaz pulsé avec décharge transversale à pression atmosphérique, comprenant un élément tubulaire creux (3) en matériau isolant en contact avec le milieu laser gazeux, une paire d'électrodes parallèles (6) qui sont disposées dans ledit élément tubulaire (3), les électrodes (6) s'étendant parallèlement à l'axe de l'élément tubulaire (3), ledit élément tubulaire (3) ayant une couche conductrice (2) qui est raccordée à l'une desdites électrodes (6) pour créer une décharge de surface sur une partie intérieure dudit élément tubulaire (2) et provoquant ainsi une émission U.V. qui pré-ionise l'espace compris entre les électrodes (6), caractérisé en ce que la couche conductrice (2) est prévue sur l'extérieur dudit élément tubulaire (3) et s'étend axialement sur la majeure partie dudit élément tubulaire (3) et presque complètement sur sa circonférence.

2. Laser selon la revendication 1, caractérisé en ce que ledit élément tubulaire (3) présente une structure cylindrique.

3. Laser selon la revendication 1 ou 2, caractérisé en ce que le milieu laser gazeux est du $CO_2$.

4. Laser selon l'une quelconque des revendications précédentes, caractérisé en ce que les électrodes (6) présentent une forme parallélépipédique, dont les bords intérieurs (8) sont lissés.

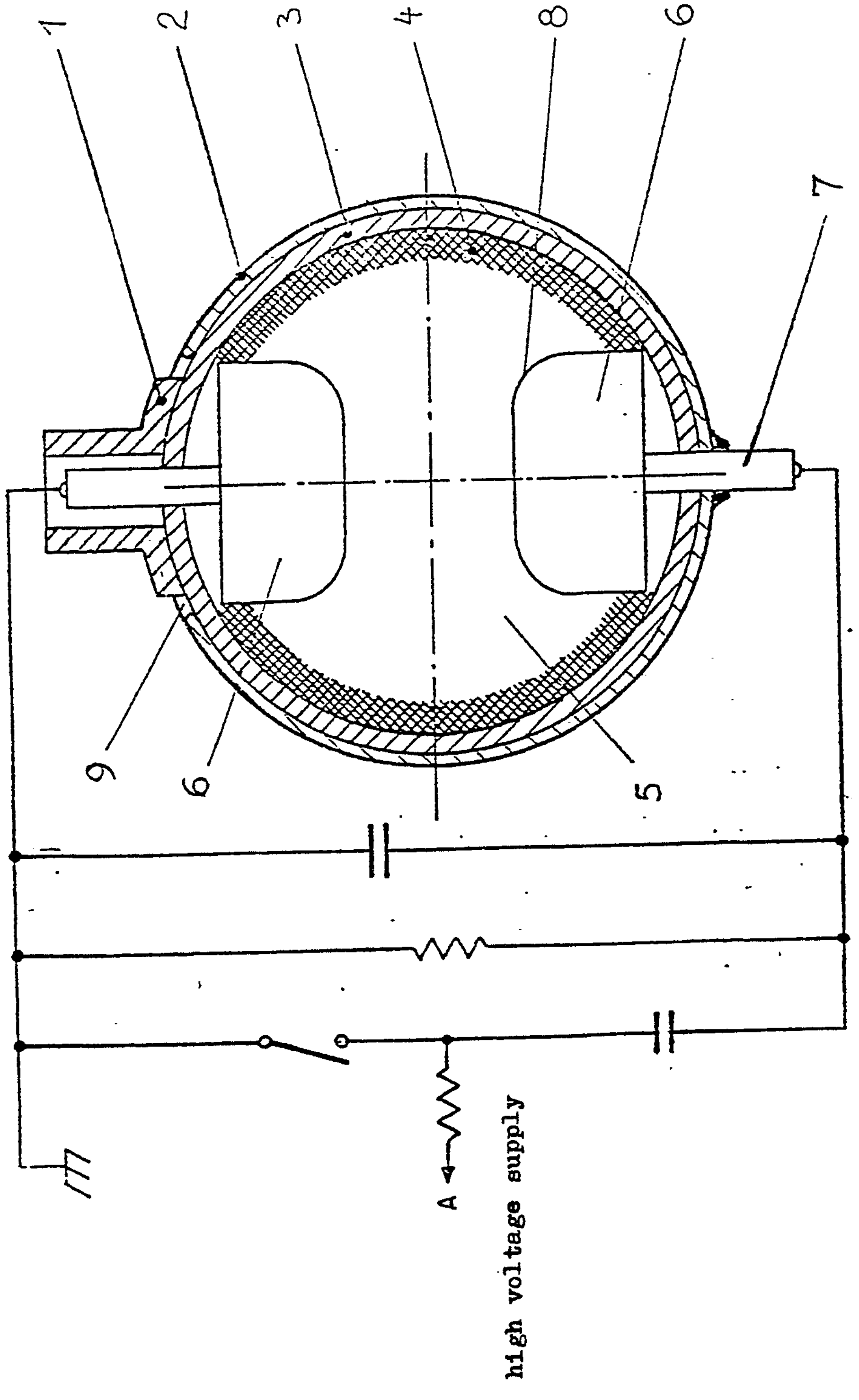


FIG. 1

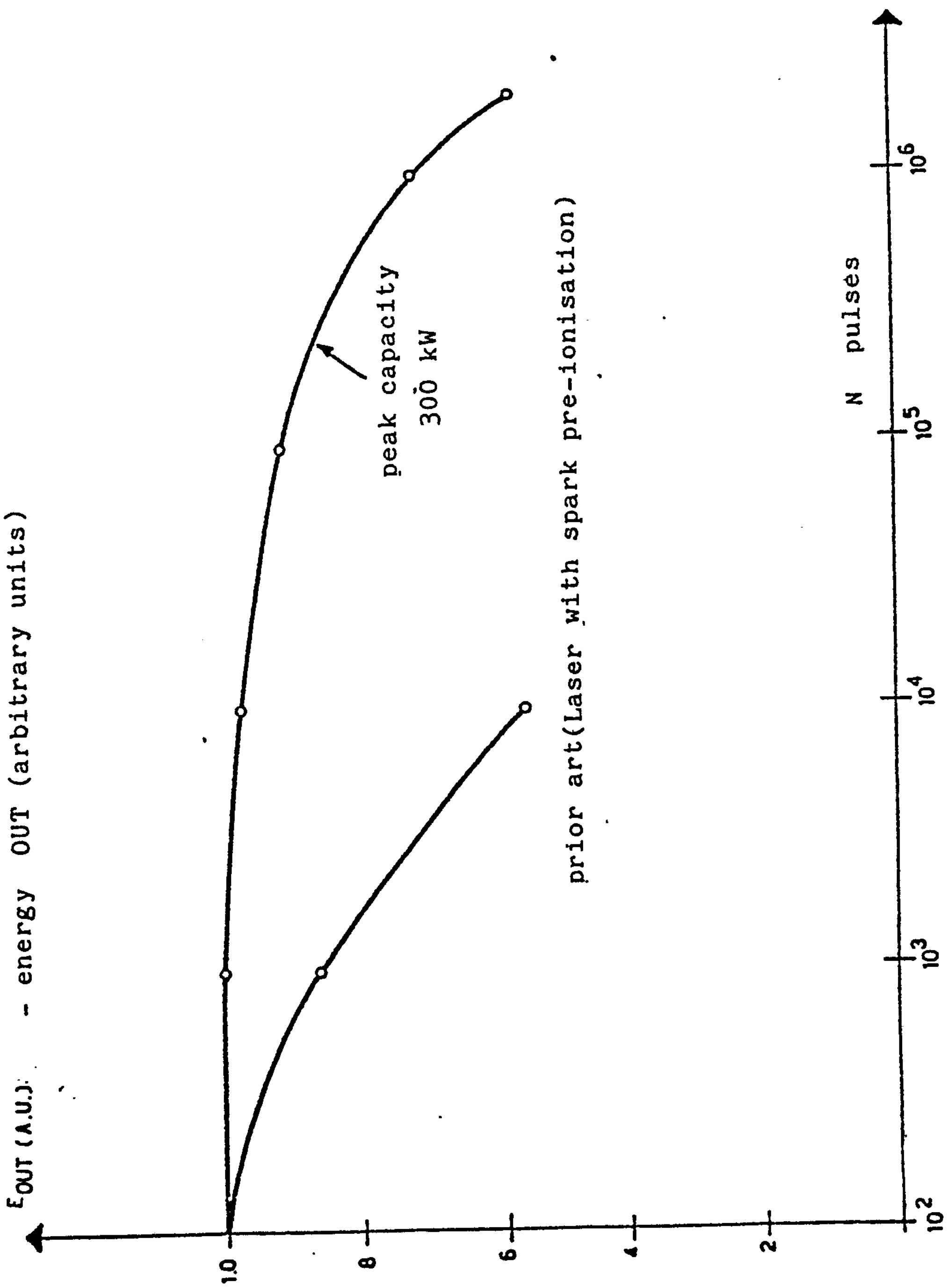

$E_{OUT}$ (A.U.) - energy OUT (arbitrary units)
peak capacity
300 kW
prior art(Laser with spark pre-ionisation)
N pulses
1.0
8
6
4
2
$10^2$
$10^3$
$10^4$
$10^5$
$10^6$


FIG. 2

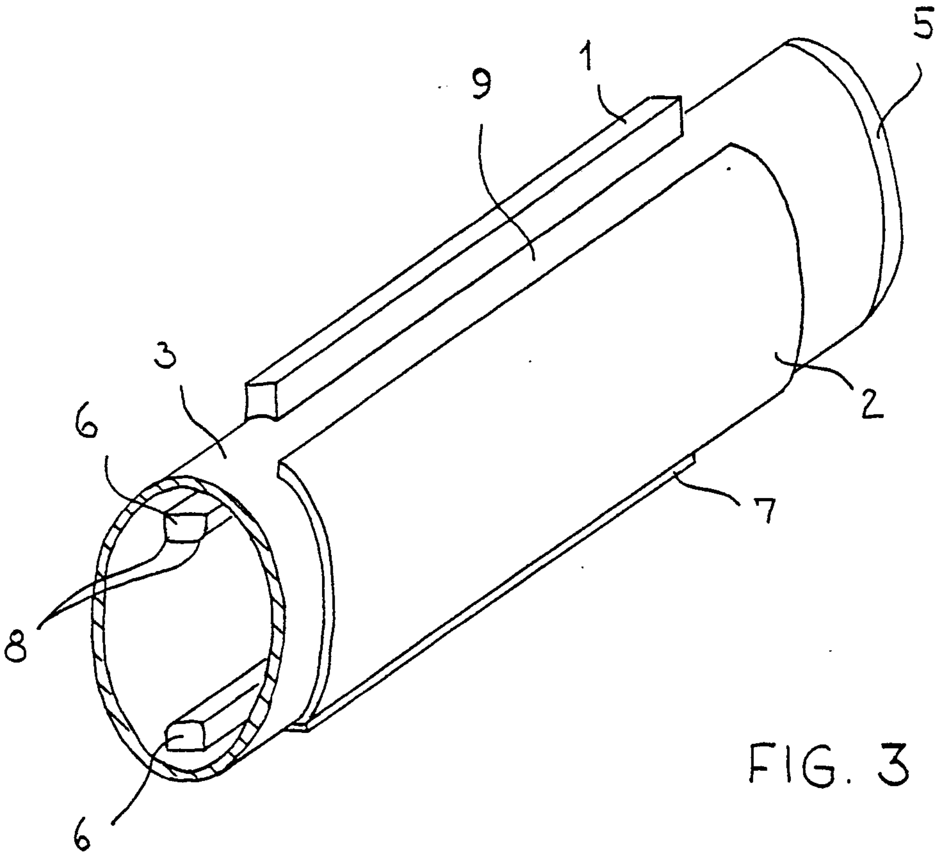


FIG. 3